# EUROPEAN PATENT SPECIFICATION

(11) **EP 3 732 549 B1**
(45) Date of publication and mention of the grant of the patent: **29.06.2022**
(21) Application number: 17825268.0
(22) Date of filing: 29.12.2017
(51) Int. Cl.: G06F 3/01, G06T 19/00, G02B 27/00

(54) **METHOD FOR PREDICTING A MOTION OF AN OBJECT AND METHOD FOR GENERATING A VIRTUAL REALITY VIEW**
VERFAHREN ZUR VORHERSAGE EINER BEWEGUNG EINES OBJEKTS UND VERFAHREN ZUR ERZEUGUNG EINER ANSICHT DER VIRTUELLEN REALITÄT
PROCÉDÉ DE PRÉDICTION D'UN MOUVEMENT D'UN OBJET ET PROCÉDÉ DE GÉNÉRATION D'UNE VUE DE RÉALITÉ VIRTUELLE

(43) Date of publication of application: 04.11.2020
(73) Proprietor: Fraunhofer-Gesellschaft zur Förderung der angewandten Forschung e.V., 80686 München (DE)
(72) Inventor: FEIGL, Tobias, 91466 Gerhardshofen (DE); MUTSCHLER, Christopher, 90556 Cadolzburg (DE)
(74) Representative: 2SPL Patentanwälte PartG mbB
(86) International application number: PCT/EP2017/084794
(87) International publication number: WO 2019/129355

(56) References cited:
- US-A1- 2008 285 805
- US-A1- 2017 357 332

## Description

### Field

The present disclosure relates to low-latency and long-term stable position and orientation estimation based on time-series sensor data. In particular, examples relate to a method for predicting a motion of an object, a method for calibrating a motion model describing a motion of an object, a method for deriving a predefined quantity and a method for generating a virtual reality view for a user. Further examples relate to apparatuses for performing the above methods.

### Background

With free movement, there is a demand to open up Virtual Reality (VR) for larger spaces. However, accurate camera-based tracking is too costly for large-scale VR as its cost grows with the size of the space and the number of user. Further, simultaneous Localization and Mapping (SLAM) based inside-out tracking approaches cannot reliably estimate the pose (i.e. position and orientation) of a user in highly interactive multi-user VR environments. For example, document US 2017/357332 A1 proposes a system for providing a wireless hand-held inertial controller for use with a head-mounted, augmented or virtual reality display by fusing (i) data related to the position of the hand-held inertial controller derived from a depth camera located on the display with (ii) data relating to the orientation of the hand-held inertial controller derived from an inertial measurement unit located in the hand-held inertial controller. It is known that depth-sensors lack in low ranges and that software lacks in the need of high textural and geometrical complexity of the environment, and is unstable to dynamic changes of the environment.

Hence, there may be a demand for improved position and orientation estimation as well as a demand for VR generation with improved immersion.

### Summary

The demands may be satisfied by examples described herein. The invention is defined by the independent claims relating to two methods and a system:
a first method for predicting a motion of an object. The method comprises determining a position of the object based on first time-series data of a position sensor mounted to the object, and determining an orientation of the object based on second time-series data of at least one inertial sensor mounted to the object. Further, the method comprises extrapolating a motion trajectory of the object based on a motion model using the position of the object and the orientation of the object, wherein the motion model uses a first weighting factor for the position of the object and a second weighting factor for the orientation of the object;
a second method for generating a virtual reality view for a user. The method comprises determining a motion of the user according to the proposed first method for predicting a motion of an object. Further the method comprises generating the virtual reality view based on the motion of the user and displaying the virtual reality view to the user; and a data processing system comprising a processor configured to perform one of the proposed methods.

### Brief description of the Figures

Some examples of apparatuses and/or methods will be described in the following by way of example only, and with reference to the accompanying figures, in which
Fig. 1 illustrates a flowchart of an example of a method for predicting a motion of an object;
Fig. 2 illustrates a flowchart of an example of a method for calibrating a motion model describing a motion of an object;
Fig. 3 illustrates a flowchart of an example of a method for deriving a predefined quantity; and
Fig. 4 illustrates a flowchart of an example of a method for generating a virtual reality view for a user.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

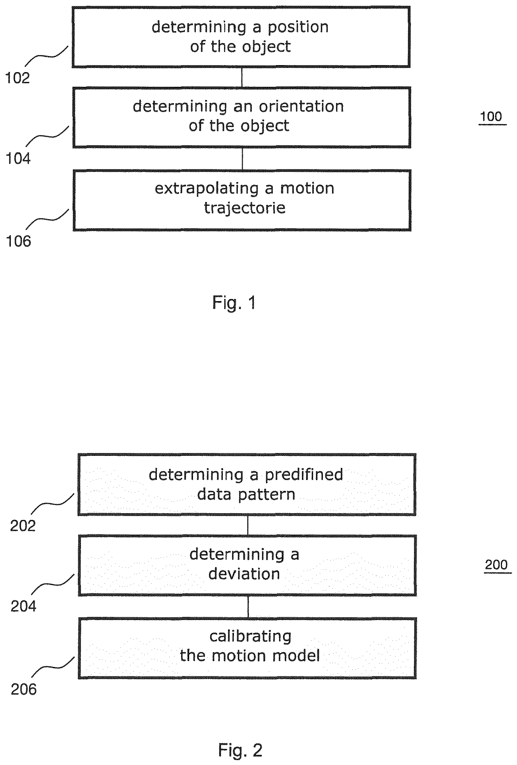

Fig. 1 illustrates a method 100 for predicting a motion of an object. The object may be any moving object that can be equipped with sensors. For example, the object may be a human being.

Method 100 comprises determining 102 a position of the object based on first time-series data of a position sensor mounted to the object (the data may be filtered or unfiltered). The first time-series data comprise information on an absolute or relative position of the position sensor, i.e. the object. For example, the first time-series data may comprise 3-dimensional position data. In general, time-series data may be understood as a sequence of data taken at successive (and e.g. equally spaced) points in time. The position sensor may, e.g., determine a Round Trip Time (RTT) or a Time Difference of Arrival (TDoA) of one or more radio frequency signals for determining its position. Alternatively, the position sensor may use a Global Navigation Satellite System or magnetic field strength sensing for determining its position.

Further, method 100 comprises determining 104 an orientation of the object based on second time-series data of at least one inertial sensor mounted to the object (the data may be filtered or unfiltered). The second time-series data comprises information about the specific force of the inertial sensor, i.e. the object. For example, the second time-series data may comprise at least one of 3-dimensional acceleration data, 3-dimensional rotational velocity data and/or 3-dimensional magnetic field strength data. The inertial sensor may, e.g., be an accelerometer, a gyroscope, a magnetometer. Optionally, part of the second time-series data may originate from a barometer or a light sensor (e.g. a diode). Hence, the second time-series data may further comprise barometric pressure data or data representing light structures of the environment.

Method 100 additionally comprises extrapolating 106 a motion trajectory of the object based on a motion model using the position of the object and the orientation of the object.

The motion model uses a first weighting factor for the position of the object and a second weighting factor for the orientation of the object. The motion model is a model describing the movement of the object by means of the motion trajectory, which describes the motion of the object through space as a function of time. The motion model may, e.g., take into account special movement characteristics of the object. For example, if the object is a human being, the motion model may take into account that human beings tend to walk in their viewing direction and that they adapt their locomotion along their visual perception.

Inertial sensors, e.g. accelerometers or gyroscopes, may provide a high update frequency (e.g. 200 Hz update frequency) and high accuracy in the short-term. However, they struggle in terms of long-term stability due to sensor drift. Position sensors, e.g., radio frequency based position sensors, provide low update frequencies (e.g. 5 Hz update frequency) but both short-term and long-term stability as well as accuracy. Using a motion model that allows to weight the contributions of the position sensor and the inertial sensor(s) for the extrapolation of the motion trajectory enables to compensate the shortcomings of one of the sensors by the other(s). Accordingly, the overall performance, i.e. the accuracy as well as the stability (long-term and short-term) of the motion estimation, may be improved.

Method 100 may further comprise adjusting the weights based on respective confidence levels for the position of the object and the orientation of the object. For example, method 100 may comprise determining a first confidence level for the position of the object and determining a second confidence level for the orientation of the object. Accordingly, method 100 may further comprise adjusting the first weighting factor based on the first confidence level (and optionally based on the second confidence level) and adjusting the second weighting factor based on the second confidence level (and optionally based on the first confidence level). As said above, inertial sensors have high accuracy in the short-term (i.e. a high confidence level in the short-term), but not in the long term (i.e. a low confidence level in the long-term). Accordingly, the second confidence level for the orientation of the object may, e.g., be determined based on a time that has lapsed since the last sensor calibration or the last reset of the sensor calibration. For example, if only a short time has lapsed since the last reset, the second weighting factor may be higher than for a long time lapse in order to correctly take into account the specific characteristics of inertial sensors. Similarly, if the second weighting factor is reduced, the first weighting factor may be increased in order to weight the position of the object more in the motion model due to the reduced accuracy/stability of the inertial sensor(s).

In some examples, contextual information may further be used for adapting the motion model. For example, method 100 may further comprise adjusting a value range for the first weighting factor (i.e. the range of possible values for the first weighting factor) and/or a value range for the second weighting factor (i.e. the range of possible values for the second weighting factor) based on contextual information related to the motion of the object. Contextual information related to the motion of the object is any information that (potentially) affects the motion of the object. For example, the contextual information may refer to the environment surrounding the object. If the object is a human being, the motion behavior of the human being differs for various situations. For example, if a human being balances on a plank, the change in orientation will be much lower than for situation in which the user does a slalom walk. Accordingly, the weighting factors of the motion model may be adjusted to better take into account the specific motion behavior of the human being.

The motion model may be based on a polynomial of at least third order in order to properly model dynamic motions. Since orientation and position are combined into a signal position by the motion model, a polynomial function of third order is enough to describe the object's motion. For example, the polynomial may be a Kochanek-Bartels spline (also known as TCB spline), a cubic Hermite spline or a Catmull-Rom spline.

Accordingly, extrapolating the motion trajectory of the object may comprise tangentially extrapolating the polynomial based on the weighted position of the object and the weighted orientation of the object. Tangential extrapolation of the motion trajectory may allow to provide a view vs. movement direction of the human being based directed extension of the motion trajectory. For example, the first weighting coefficient for the position may initially be 25 %, whereas the second weighting coefficient for the orientation may initially be 75 %. Accordingly, the angle under which the tangent is touching the polynomial may be adjusted.

Further, motion states of the object may be used for adjusting the motion model. A motion state describes a specific type of motion by the object. For example, motion states may be silence (standing), motion, walking, running, change from silence to running/walking, change from running/walking to silence, silence while rotating etc. Therefore, method 100 may further comprise determining a motion state of the object based on the first time-series data and/or the second time-series data. For example, if an accelerometer and a gyroscope are used as inertial sensors, silence (i.e. no position change) of the object may be determined if none of the accelerometer and the gyroscope indicates (linear) acceleration of the object. For example, the motion state may be a ground truth moment. Moreover, activation thresholds for the acceleration may be used to optimize jittered position data. One or more thresholds may smooth and hinder the activation/deactivation of a radio frequency based position of the object. That is, an acceleration sensor and a radio frequency position may allow to remove jitter based on the motion magnitude. Accordingly, method 100 may comprise adjusting the first weighting factor and the second weighting factor based on the motion state. For example, if the motion state describes silence of the object, the first weighting factor may be reduced since no position change is likely to occur. Accordingly, the motion trajectory may be extrapolated with high accuracy if, e.g., the first time-series data (i.e. the positon data) is noisy.

For example, method 100 may allow pose (positon and orientation) estimation for a human being by combining a single inertial located at the human being's head with rather inaccurate positional tracking. Method 100 may allow to adapt sensors to the current situation and to exploit the strengths of one sensor for compensating the shortcomings of the other sensor(s).

For example, method 100 may be used for VR applications. The motion model may be based on a TCB spline. Projective blending may be further used to improve immersion and, hence, presence in VR applications. In addition to TCB splines also cubic or Catmull-Rom splines may be used for modeling human motion. However, TCB splines may be more adaptive and parameterizable to motion scenarios and abrupt changes of the motion direction.

To provide a proper extrapolation of the motion tangent, method 100 uses weighting of the tangent function based on the current body to head pose (described by the orientation and the position of the human being). Under regular movement conditions, the viewing direction (i.e. the orientation) may provide the highest weight for the current tangent function. The body to head pose may, e.g., be derived from a detected ground truth moment.

As indicated above, if there is no reset point (e.g. a point in time at which the orientation estimate may be recalibrated to a trustworthy ground truth orientation), the position may be weighted more until the calibration can be calibrated. Subsequent to a calibration the orientation may again be weighted more with respect to the position in the tangent function. Orientation stability of an inertial sensor may, e.g., depend on the intensity of head movement and sensor temperature over time (both being examples for contextual information related to the motion of the object).

That is, method 100 predicts a position and estimates in parallel the current orientation. The current orientation may, e.g., be weighted highest for the current extrapolation tangential function in the TCB spline. As indicated above, the position may get a higher weight in the extrapolation method, if the current orientation estimation is not confident/trustable (e.g. due to sensor drift, magnetic interference, etc. over time). The motion model is, hence, made up by the extrapolation.

Although the motion model may be considered harsh at dynamic motions since it is a polynomial of third degree, TCB splines etc. are adequately parameterizable in order to compensate fast dynamic changes. Since method 100 combines orientation and position into one position, the position may be described with a third order polynomial.

Furthermore, (physical) constraints related to the human being carrying the sensors may be used for filtering the first and the second time-series data. For example, a complementary filter (or a Kalman filter or a particle filter) on the orientation may be used for keeping care of the current orientation and anomalies of it during e.g. a human being's walk in VR. For example, the filter of the orientation cannot drift away for more than 90 ° over a short time (e.g. 5 minutes) as this is physically not human like motion. Also, human beings tend to walk into their viewing direction. Accordingly, if someone walks straight for a long time, he/she is likely to look along the walking direction. This is, e.g., true for VR applications as people tend to be more afraid about what comes next (e.g. collision or crash).

The highly parameterizable TCB splines may allow to accurately represent slow, fast, static or dynamic movements of a human being. Accordingly, the motion model may be as paramterizable as possible while keeping the number of parameters for this task as low as possible. In VR applications, method 100 may further allow to extrapolate, i.e. predict, future moments without a human being noticing failures.

As indicated above, ground truth moments may be used for calibrating the motion model. This is described more detailed with respect to **Fig. 2**. Fig. 2 illustrates a method 200 for calibrating a motion model describing a motion of an object.

Method 200, which is not part of the claimed invention, comprises determining 202 a predefined data pattern in time-series data of a plurality of sensors mounted to the object. The predefined data pattern is related to a specific motion, a specific position and/or a specific orientation of the object. Specific motions, specific positions and/or specific orientations of the object create specific data patterns in the sensor data (e.g. a sensor shows specific change in the measured acceleration, position etc.) and may, hence, be understood as ground truth moments. For these specific motions, specific positions and/or specific orientations of the object, the current physical correct state of the sensor, i.e. physical correct output data of the sensor, is known. This known data may be used as reference data for calibration. For example, methods from the field of machine learning such as classification may be used to (re)identify such moments. In other words, support vector machines or neural networks can be used to find extract features from the sensor streams to classify and (re)identify ground truth moments.

Accordingly, method 200 further comprises determining 204 a deviation of time-series data of one of the plurality of sensors with respect to the reference data. The reference data are related to the predefined data pattern (i.e. the ground truth moment). In other words, the actual time-series data of a sensor is compared to the expected output data of the sensor for predefined movements of the object.

Further, method 200 comprises calibrating 206 the motion model based on the deviation. For example, if the motion model comprises a filter (e.g. Bayesian filter) with at least one adjustable parameter, calibrating 206 the motion model may comprise adjusting the parameter based on the deviation. Using a ground truth moment may, e.g., allow to correct and stabilize a Kalman filter.

Method 200 may, hence, allow to reset or recalibrate the motion model. For example, if the object is a human being, a sensor may be mounted at the head (e.g. providing relative hand pose with respect to the sensor location), whereas another sensor is mounted at the hand (e.g. providing relative information of the hand movement). Two more sensors may be mounted at the head (e.g. one providing the absolute position in world space and the other the absolute orientation). In this configuration, each sensor returns information in different coordinate spaces and the pieces of information cannot be mapped since they are erroneous and drifting. However, the inertial sensors at the head may be complemented with absolute position vectors in order to correct the orientation (by determining characteristic data patterns in the sensor data and subsequently comparing the sensor data to reference data). Based on the optimal orientation, the relative hand movement and, hence, the hand pose may be determined.

Also method 200 may be used for VR applications in order to correct the viewing direction in the VR view. For example, if the motion model is part of an algorithm for generating a VR view for a user, method 200 may further comprise continuously changing the VR view based on the deviation. Changes between consecutive frames of the virtual reality view are below a perceptibility threshold of the user. Accordingly, method 200 may be used for correcting the VR view such that the user cannot realize the correction. Immersion of the VR view may, hence, be maintained.

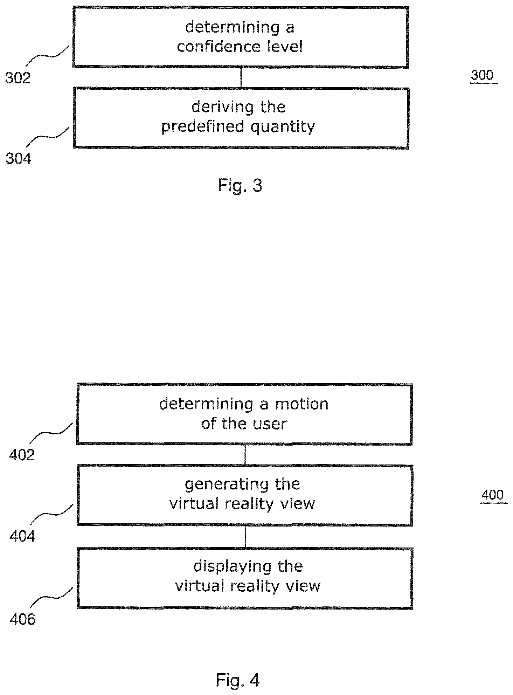

Further, complementary effects of available sensor data may be used to improve, e.g., position and orientation estimates. This is further discussed in the following with respect to **Fig. 3**. Fig. 3 illustrates a method 300 for deriving a predefined quantity.

Method 300, which is not part of the claimed invention, comprises determining a confidence level for time-series data of at least one sensor with respect to deriving the predefined quantity thereof. The confidence level denotes how suitable or error-prone the time-series data are with respect to deriving the predefined quantity thereof. The confidence level for the time-series data may, e.g., be determined based on the type of sensor and/or the type of the predefined quantity. For example, time-series data of an acceleration sensor in a shoe of human being (or at any other position of the body, e.g., the head) may be used for determining the presence of a step of the human being, the number of steps of the human being or a step-length of the human being. While the presence of a step of the human being (being an exemplary predefined quantity) may be determined with high accuracy based on the time-series data of the acceleration sensor, the step-length of the human being (being another exemplary predefined quantity) is likely to be determined erroneous. Accordingly, the acceleration sensor should not be used alone for determining the step-length of the human being since the confidence level for deriving the step-length of the human being is low.

If the confidence level is below a threshold, method 300 comprises deriving 304 the predefined quantity using the time-series data of the at least one sensor together with further time-series data of at least one further sensor. The predefined quantity is derived using a first weighting factor for the time-series data of the at least one sensor and a second weighting factor for the further time-series data of at least one further sensor. In other words, at least one further sensor is used to stabilize the sensor(s) with low confidence level. Accordingly, the predefined quality may be derived with high accuracy in an adaptive manner.

Referring to above step detection example, one may think of a step detection that identifies steps of a human being's feet totally correct. However, the detection of the step-length is erroneous. Accordingly, a huge positioning error may arise with increasing distance. A radio frequency based positon sensor may provide low accuracy. However, the accuracy of the position measurement increases with increasing distance. Accordingly, the positioning error over longer distances is almost zero for the radio frequency based positon sensor, whereas the combined step detection and step-length error is huge. Method 300 therefore uses the radio frequency based positon sensor to repair the miss detected combination of step detection and step-length and correct the step-length.

In this respect, the weighting factors for the individual time-series data may be adjusted using various pieces of information. Method 300 may, hence, further comprise determining the first weighting factor and/or the second weighting factor using at least one of the confidence level for the time-series data of the at least one sensor, a confidence level of the further time-series data of the at least one further sensor, one or more physical constraints related to an object carrying the at least one sensor (e.g. motion behavior, minimum/maximum possible acceleration or velocity, maximum possible head rotation, maximum head rotation acceleration/velocity, maximum displacement delta etc.), and contextual information related to the object. The contextual information related to the object is any information that may affect the motion of the object (e.g. a map, light conditions, daytime, number of people in the vicinity, etc.).

For example, a machine learning algorithm (i.e. an algorithm that gives a computer the ability to learn without being explicitly programmed) may be used for determining the first weighting factor and/or the second weighting factor. Accordingly, adaptive determination of the predefined quantity may be enabled.

As indicated above, the forgoing aspects may be used in the context of VR. In the following, a method 400 for generating a VR view for a user is described in more detail with respect to **Fig 4**. Method 400 comprises determining 402 a motion of the user according to the above described method for predicting a motion of an object (i.e. the user is the object). Accordingly, the motion of the user may be determined with high accuracy and stability in the long-term.

Further, method 400 comprises generating 404 the VR view based on the motion of the user, and displaying 406 the VR view to the user. The motion of the user may be transformed by an algorithm for generating the virtual VR into a position, orientation or movement of the user in the VR. Accordingly, the view is updated based on the motion of the user. The VR view may be displayed to the user by means of a Head-Mounted Display (HMD), a Head-Mounted Display Unit or a Head-Mounted Unit (HMU).

Since the motion of the user may be determined with high accuracy and stability in the long-term, the user's perception of being physically present in the VR may be increased. For example, if the position sensor is radio frequency based, the first time-series data may result in position errors/jumps of, e.g., about 50 cm. Hence, using only the first time-series data of the position sensor for generating the VR view would result in camera jumps/jitter in the VR view. The user will experience these position errors as jumps which destroy the effect of a freely walkable presence. However, since the motion model additional uses the second time-series data, these jumps are compensated due complementary effect of the inertial sensor(s). For example, a motion state may be determined based on the second time-series data and user to stabilize the motion trajectory. Accordingly, no jumps will occur in the VR view so that the immersion for the user is increased.

As described above, predefined/known/specific motions of the user may be used for calibrating the motion model. These motions may be triggered by, e.g., acoustical, visual, olfactory or haptic effects on the user. By applying such effects, the user may be manipulated to perform known movement (re)actions. These motions may be detected using the sensors and compared to expected measurement data in order to reset/calibrate the current estimates for position, orientation etc.

Method 400 may, hence, further comprise calculating expected first time-series data of the position sensor (and/or expected second time-series data of the at least one inertial sensor) for a predefined movement of the user. Further method 400 may comprise changing the virtual reality view, outputting a sound and/or emitting smell to the user in order to urge the user to execute the predefined movement. Additionally, method 400 may comprises determining an error of actual first time-series data of the position sensor (and/or actual second time-series data of the at least one inertial sensor) for the predefined movement of the user with respect to the expected first time-series data.

As said above, the comparison of expected to actual sensor data may be used for calibrating the motion model. Accordingly, method 400 may further comprise calibrating the motion model based on the error.

Further, the VR view may be corrected/calibrated. Method 400 may therefore further comprise continuously changing the virtual reality view based on the error, wherein changes between consecutive frames of the virtual reality view due to the error are below a perceptibility threshold of the user. The perceptibility threshold is the weakest stimulus/change that the user can detect between consecutive frames. Accordingly, the VR view may be corrected while the user's immersion is maintained.

For example, a sound that comes suddenly from the left side to the user (e.g. a car with a siren approaches) may be output to the user, so that the user will jump to the right. This reaction of the user is known and also the motion of the user is known. Accordingly, the error of the sensor miss movement may be calculated. For example, an axis of an accelerometer is drifted by 90 °. If the above effect is applied (based on an absolute position trajectory of straight forward movement) to make the user jump away in the opposite direction of the sound source, it can be seen that the accelerometer orientation drifted. This is due to the knowledge about the limited kinematics of human beings, which limits the performable actions of the user. Accordingly, orientation errors (direction changes) etc. may be estimated.

Further, a user may be made to walk in a known VR terrain, for which human motion or behavior is known. For this known VR terrain, the sensor measurement may be predicted and compared to the actual sensor measurements in order to determine the sensor error. For example, a user balancing over a wooden plank or a high wire between two houses will have a very specific and centric movement (velocity and orientation change).

Similarly, a user may be urged to move faster (velocity change) by applying a sound effect like a penetrating bee that goes after the user. Velocity changes may further be triggered by visual distraction like increasing or decreasing the size of, e.g., floor textures like a chess pattern in the VR view. For example, if 1 × 1 m is the regular size of the floor tiles in the VR view, the user will slow down if the size is changed to 0.1 × 0.1 m and speed up if the size is changed to 10 × 10 m. In order to maintain the immersion for the user, changes of visual elements in the VR view between consecutive frames are below the perceptibility threshold of the user.

Manipulated motions of the user may further be used to correct the VR view based on previously determined errors. For example, method 400 may comprise determining an orientation error and/or a positioning error in the VR view. Accordingly, method 400 may further comprise changing the virtual reality view, outputting a sound and/or emitting smell to the user in order to urge the user to execute a predefined movement. While the user executes the predefined movement, method 400 may comprise continuously changing the virtual reality view based on the orientation error and/or the positioning error, wherein changes between consecutive frames of the virtual reality view due to the orientation error and/or the positioning error are below a perceptibility threshold of the user. For example, the change of the VR view due to the predefined movement may be intensified or weakened in order to continuously correct the VR view for the orientation error and/or the positioning error.

For example, the user may be redirected by acoustical or visual changes. In some examples, a constant drift may be applied to the user's view (i.e. the VR view) that is unnoticeable to the user but lets the user walk on a circle rather than on a straight line. The same holds for an acoustical effect for which the user tends redirect based on the acoustical perception.

In other words, changing the VR view may comprise changing a viewing direction in the virtual reality view or transforming a geometry of at least one object in the virtual reality view, wherein changes of the viewing direction or transformations of the geometry of the at least one object between consecutive frames of the virtual reality view are below a perceptibility threshold of the user.

Method 400 may further comprise one or more of the aspects described above in connection with Figs. 1 to 3.

Aspects of the present disclosure solve problems of inaccurate sensors (noise, instability, shift of axes, missing calibration, drift over time). Moreover, aspects of the present disclosure solve problems of nonlinear movement based positioning. Also, aspects of the present disclosure solve problems of an instable head orientation about the yaw/body axis of a human being. Aspects of the present disclosure exploit moments that represent ground truth moments of sensor information in specific situations. Further, aspects of the present disclosure complement different data and ground truth moments to recalibrate drifts and biases. Moreover, aspects of the present disclosure introduce weights to balance between the importances of different contributions to the final result (reliability). Aspects of the present disclosure further improve immersion and presence in VR applications based on highly parameterizable TCP splines that allow to extrapolate/predict further values based on a weighted tangent that is based on view vs. position. Further, aspects of the present disclosure add a motion model that "knows" human motion. Moreover, aspects of the present disclosure introduce automatic learning in order to predict predefined quantities as fast as possible. Aspects of the present disclosure relate to an adaptive filter structure. Also, aspects of the present disclosure optimize motion models by unknowingly manipulation users by effects with predictable results (e.g. acceleration/deceleration).

The aspects and features mentioned and described together with one or more of the previously detailed examples and figures, may as well be combined with one or more of the other examples in order to replace a like feature of the other example or in order to additionally introduce the feature to the other example.

Examples may further be or relate to a (computer) program having a program code for performing one or more of the above methods, when the (computer) program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover data processing systems, computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art.

A flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method (100) for predicting a motion of an object, comprising:
determining (102) a position of the object based on first time-series data of a position sensor mounted to the object;
determining (104) an orientation of the object based on second time-series data of at least one inertial sensor mounted to the object;
the method being **characterised in**
extrapolating (106) a motion trajectory of the object based on a motion model using the position of the object and the orientation of the object, wherein the motion model uses a first weighting factor for the position of the object and a second weighting factor for the orientation of the object.

2. The method of claim 1, further comprising:
determining a first confidence level for the position of the object;
determining a second confidence level for the orientation of the object;
adjusting the first weighting factor based on the first confidence level; and
adjusting the second weighting factor based on the second confidence level.

3. The method of claim 2, further comprising:
adjusting a value range for the first weighting factor and/or a value range for the second weighting factor based on contextual information related to the motion of the object.

4. The method of any of claims 1 to 3, wherein the motion model is based on a polynomial of at least third order.

5. The method of claim 4, wherein the polynomial is a Kochanek-Bartels spline or a cubic Hermite spline.

6. The method of claim 4 or claim 5, wherein extrapolating the motion trajectory of the object comprises tangentially extrapolating the polynomial based on the weighted position of the object and the weighted orientation of the object.

7. The method of any of claims 1 to 6, further comprising:
determining a motion state of the object based on the first time-series data and/or the second time-series data;
adjusting the first weighting factor and the second weighting factor based on the motion state.

8. The method of any of claims 1 to 7, wherein the second time-series data comprises at least one of 3-dimensional acceleration data, 3-dimensional rotational velocity data, 3-dimensional magnetic field strength data and/or barometric pressure data.

9. The method of any of claims 1 to 8, wherein the first time-series data comprises 3-dimensional position data.

10. A method (400) for generating a virtual reality view for a user, comprising:
determining (402) a motion of the user according to the method of any of claims 1 to 9;
generating (404) the virtual reality view based on the motion of the user; and
displaying (406) the virtual reality view to the user.

11. The method of claim 10, further comprising:
calculating expected first time-series data of the position sensor for a predefined movement of the user;
changing the virtual reality view, outputting a sound and/or emitting smell to the user in order to urge the user to execute the predefined movement; and
determining an error of actual first time-series data of the position sensor for the predefined movement of the user with respect to the expected first time-series data.

12. The method of claim 11, further comprising:
calibrating the motion model based on the error; and/or
continuously changing the virtual reality view based on the error, wherein changes between consecutive frames of the virtual reality view due to the error are below a perceptibility threshold of the user.

13. The method of claim 10, further comprising:
determining an orientation error and/or a positioning error in the virtual reality view;
changing the virtual reality view, outputting a sound and/or emitting smell to the user in order to urge the user to execute a predefined movement; and
continuously changing the virtual reality view based on the orientation error and/or the positioning error while the user executes the predefined movement, wherein changes between consecutive frames of the virtual reality view due to the orientation error and/or the positioning error are below a perceptibility threshold of the user.

14. The method of claim 11 or claim 13, wherein changing the virtual reality view comprises changing a viewing direction in the virtual reality view or transforming a geometry of at least one object in the virtual reality view, wherein changes of the viewing direction or transformations of the geometry of the at least one object between consecutive frames of the virtual reality view are below a perceptibility threshold of the user.

15. A data processing system comprising a processor configured to perform the method according to any of claims 1 to 9 or the method according to any of claims 10 to 14.

## Patentansprüche

1. Ein Verfahren (100) zum Vorhersagen einer Bewegung eines Objekts, umfassend:
Bestimmen (102) einer Position des Objekts basierend auf ersten Zeitreihendaten eines an dem Objekt befestigten Positionssensors;
Bestimmen (104) einer Ausrichtung des Objekts basierend auf zweiten Zeitreihendaten von zumindest einem an dem Objekt befestigten Trägheitssensor;
wobei das Verfahren **gekennzeichnet ist durch**
Extrapolieren (106) einer Bewegungstrajektorie des Objekts basierend auf einem Bewegungsmodell unter Verwendung der Position des Objekts und der Ausrichtung des Objekts, wobei das Bewegungsmodell einen ersten Gewichtungsfaktor für die Position des Objekts und einen zweiten Gewichtungsfaktor für die Ausrichtung des Objekts verwendet.

2. Das Verfahren gemäß Anspruch 1, ferner umfassend:
Bestimmen eines ersten Konfidenzniveaus für die Position des Objekts;
Bestimmen eines zweiten Konfidenzniveaus für die Ausrichtung des Objekts;
Anpassen des ersten Gewichtungsfaktors basierend auf dem ersten Konfidenzniveau; und
Anpassen des zweiten Gewichtungsfaktors basierend auf dem zweiten Konfidenzniveau.

3. Das Verfahren gemäß Anspruch 2, ferner umfassend:
Anpassen eines Wertebereichs für den ersten Gewichtungsfaktor und/oder eines Wertebereichs für den zweiten Gewichtungsfaktor basierend auf Kontextinformationen in Bezug auf die Bewegung des Objekts.

4. Das Verfahren gemäß einem der Ansprüche 1 bis 3, wobei das Bewegungsmodell auf einem Polynom mindestens dritter Ordnung basiert.

5. Das Verfahren gemäß Anspruch 4, wobei das Polynom ein Kochanek-Bartels-Spline oder ein Kubisch Hermetischer Spline ist.

6. Das Verfahren gemäß Anspruch 4 oder Anspruch 5, wobei das Extrapolieren der Bewegungstrajektorie des Objekts ein tangentiales Extrapolieren des Polynoms basierend auf der gewichteten Position des Objekts und der gewichteten Ausrichtung des Objekts umfasst.

7. Das Verfahren gemäß einem der Ansprüche 1 bis 6, ferner umfassend:
Bestimmen eines Bewegungszustands des Objekts basierend auf den ersten Zeitreihendaten und/oder den zweiten Zeitreihendaten;
Anpassen des ersten Gewichtungsfaktors und des zweiten Gewichtungsfaktors basierend auf dem Bewegungszustand.

8. Das Verfahren gemäß einem der Ansprüche 1 bis 7, wobei die zweiten Zeitreihendaten zumindest eines von dreidimensionalen Beschleunigungsdaten, dreidimensionalen Rotationsgeschwindigkeitsdaten, dreidimensionalen Magnetfeldstärkedaten und/oder barometrischen Druckdaten umfassen.

9. Das Verfahren gemäß einem der Ansprüche 1 bis 8, wobei die ersten Zeitreihendaten dreidimensionale Positionsdaten umfassen.

10. Ein Verfahren (400) zum Erzeugen einer Virtuelle-Realität-Ansicht für einen Benutzer, umfassend:
Bestimmen (402) einer Bewegung des Benutzers gemäß dem Verfahren gemäß einem der Ansprüche 1 bis 9;
Erzeugen (404) der Virtuelle-Realität-Ansicht basierend auf der Bewegung des Benutzers; und
Anzeigen (406) der Virtuelle-Realität-Ansicht für den Benutzer.

11. Das Verfahren gemäß Anspruch 10, ferner umfassend:
Berechnen von erwarteten ersten Zeitreihendaten des Positionssensors für eine vordefinierte Bewegung des Benutzers;
Ändern der Virtuelle-Realität-Ansicht, Ausgeben eines Tons und/oder Emittieren eines Geruchs an den Benutzer, um den Benutzer zu veranlassen, die vordefinierte Bewegung auszuführen; und
Bestimmen eines Fehlers von tatsächlichen ersten Zeitreihendaten des Positionssensors für die vordefinierte Bewegung des Benutzers im Hinblick auf die erwarteten ersten Zeitreihendaten.

12. Das Verfahren gemäß Anspruch 11, ferner umfassend:
Kalibrieren des Bewegungsmodells basierend auf dem Fehler; und/oder
kontinuierliches Ändern der Virtuelle-Realität-Ansicht basierend auf dem Fehler, wobei Änderungen zwischen aufeinanderfolgenden Bildern der Virtuelle-Realität-Ansicht aufgrund des Fehlers unterhalb einer Wahrnehmbarkeitsschwelle des Benutzers liegen.

13. Das Verfahren gemäß Anspruch 10, ferner umfassend:
Bestimmen eines Ausrichtungsfehlers und/oder eines Positionierungsfehlers in der Virtuelle-Realität-Ansicht;
Ändern der Virtuelle-Realität-Ansicht, Ausgeben eines Tons und/oder Emittieren eines Geruchs an den Benutzer, um den Benutzer zu veranlassen, eine vordefinierte Bewegung auszuführen; und
kontinuierliches Ändern der Virtuelle-Realität-Ansicht basierend auf dem Ausrichtungsfehler und/oder dem Positionierungsfehler, während der Benutzer die vordefinierte Bewegung ausführt, wobei Änderungen zwischen aufeinanderfolgenden Bildern der Virtuelle-Realität-Ansicht aufgrund des Ausrichtungsfehlers und/oder des Positionierungsfehlers unterhalb einer Wahrnehmbarkeitsschwelle des Benutzers liegen.

14. Das Verfahren gemäß Anspruch 11 oder Anspruch 13, wobei das Ändern der Virtuelle-Realität-Ansicht ein Ändern einer Blickrichtung in der Virtuelle-Realität-Ansicht oder ein Transformieren einer Geometrie zumindest eines Objekts in der Virtuelle-Realität-Ansicht umfasst, wobei Änderungen der Blickrichtung oder Transformationen der Geometrie des zumindest einen Objekts zwischen aufeinanderfolgenden Bildern der Virtuelle-Realität-Ansicht unterhalb einer Wahrnehmbarkeitsschwelle des Benutzers liegen.

15. Ein Datenverarbeitungssystem, umfassend einen Prozessor, der ausgebildet ist, das Verfahren gemäß einem der Ansprüche 1 bis 9 oder das Verfahren gemäß einem der Ansprüche 10 bis 14 auszuführen.

## Revendications

1. Procédé (100) pour prédire un mouvement d'un objet, comprenant le fait de :
déterminer (102) une position de l'objet sur la base de premières données de série temporelle d'un capteur de position monté sur l'objet ;
déterminer (104) une orientation de l'objet sur la base de deuxièmes données de série temporelle d'au moins un capteur inertiel monté sur l'objet ;
le procédé étant caractérisé en
extrapolant (106) une trajectoire de mouvement de l'objet sur la base d'un modèle de mouvement utilisant la position de l'objet et l'orientation de l'objet, le modèle de mouvement utilisant un premier facteur de pondération pour la position de l'objet et un deuxième facteur de pondération pour l'orientation de l'objet.

2. Procédé selon la revendication 1, comprenant en outre le fait de :
déterminer un premier niveau de confiance pour la position de l'objet ;
déterminer un deuxième niveau de confiance pour l'orientation de l'objet ;
ajuster le premier facteur de pondération sur la base du premier niveau de confiance ; et
ajuster le deuxième facteur de pondération sur la base du deuxième niveau de confiance.

3. Procédé selon la revendication 2, comprenant en outre le fait de :
ajuster une plage de valeurs pour le premier facteur de pondération et/ou une plage de valeurs pour le deuxième facteur de pondération sur la base d'informations contextuelles relatives au mouvement de l'objet.

4. Procédé selon l'une des revendications 1 à 3, le modèle de mouvement étant basé sur un polynôme d'au moins le troisième ordre.

5. Procédé selon la revendication 4, le polynôme étant une spline de Kochanek-Bartels ou une spline cubique d'Hermite.

6. Procédé selon la revendication 4 ou la revendication 5, l'extrapolation de la trajectoire de mouvement de l'objet comprenant une extrapolation tangentielle du polynôme sur la base de la position pondérée de l'objet et de l'orientation pondérée de l'objet.

7. Procédé selon l'une des revendications 1 à 6, comprenant en outre le fait de :
déterminer un état de mouvement de l'objet sur la base des premières données de série temporelle et/ou des deuxièmes données de série temporelle ;
ajuster le premier facteur de pondération et le deuxième facteur de pondération sur la base de l'état de mouvement.

8. Procédé selon l'une des revendications 1 à 7, les deuxièmes données de série temporelle comprenant au moins les unes parmi des données d'accélération tridimensionnelles, des données de vitesse de rotation tridimensionnelles, des données d'intensité de champ magnétique tridimensionnelles et/ou des données de pression barométrique.

9. Procédé selon l'une des revendications 1 à 8, les premières données de série temporelle comprenant des données de position tridimensionnelles.

10. Procédé (400) pour générer une vue de réalité virtuelle pour un utilisateur, comprenant le fait de :
déterminer (402) un mouvement de l'utilisateur selon le procédé selon l'une des revendications 1 à 9;
générer (404) la vue de réalité virtuelle sur la base du mouvement de l'utilisateur ; et
afficher (406) la vue de réalité virtuelle à l'utilisateur.

11. Procédé selon la revendication 10, comprenant en outre le fait de :
calculer des premières données de série temporelle attendues du capteur de position pour un mouvement prédéfini de l'utilisateur ;
changer la vue de réalité virtuelle, sortir un son et/ou émettre une odeur à l'utilisateur afin d'inciter l'utilisateur à exécuter le mouvement prédéfini ; et
déterminer une erreur des premières données de série temporelle réelles du capteur de position pour le mouvement prédéfini de l'utilisateur par rapport aux premières données de série temporelle attendues.

12. Procédé selon la revendication 11, comprenant en outre le fait de :
étalonner le modèle de mouvement sur la base de l'erreur ; et/ou
changer continuellement la vue de réalité virtuelle sur la base de l'erreur, les changements entre des trames consécutives de la vue de réalité virtuelle dus à l'erreur étant inférieurs à un seuil de perceptibilité de l'utilisateur.

13. Procédé selon la revendication 10, comprenant en outre le fait de :
déterminer une erreur d'orientation et/ou une erreur de positionnement dans la vue de réalité virtuelle ;
changer la vue de réalité virtuelle, sortir un son et/ou émettre une odeur à l'utilisateur afin d'inciter l'utilisateur à exécuter un mouvement prédéfini ; et
changer continuellement la vue de réalité virtuelle sur la base de l'erreur d'orientation et/ou de l'erreur de positionnement pendant que l'utilisateur exécute le mouvement prédéfini, les changements entre des trames consécutives de la vue de réalité virtuelle dus à l'erreur d'orientation et/ou à l'erreur de positionnement étant inférieurs à un seuil de perceptibilité de l'utilisateur.

14. Procédé selon la revendication 11 ou la revendication 13, le changement de la vue de réalité virtuelle comprenant un changement d'une direction de visualisation dans la vue de réalité virtuelle ou une transformation d'une géométrie d'au moins un objet dans la vue de réalité virtuelle, les changements de la direction de visualisation ou les transformations de la géométrie de l'au moins un objet entre des trames consécutives de la vue de réalité virtuelle étant inférieurs à un seuil de perceptibilité de l'utilisateur.

15. Système de traitement de données comprenant un processeur configuré pour exécuter le procédé selon l'une des revendications 1 à 9 ou le procédé selon l'une des revendications 10 à 14.
